(19) Europäisches Patentamt
European Patent Office
Office européen des brevets

(11) **EP 3 197 938 B1**

(12) **FASCICULE DE BREVET EUROPEEN**

(45) Date de publication et mention de la délivrance du brevet:
**16.11.2022 Bulletin 2022/46**

(21) Numéro de dépôt: **15766919.3**

(22) Date de dépôt: **04.09.2015**

(51) Classification Internationale des Brevets (IPC):
**C08G 81/02** (2006.01)    **C09D 5/08** (2006.01)

(52) Classification Coopérative des Brevets (CPC):
**C09D 5/08; C08G 81/028**

(86) Numéro de dépôt international:
**PCT/FR2015/052350**

(87) Numéro de publication internationale:
**WO 2016/046463 (31.03.2016 Gazette 2016/13)**

(54) **UTILISATION D'UN COPOLYMERE A BLOCS POUR LA PROTECTION DE PIECES A BASE DE METAUX**

VERWENDUNG EINES BLOCKCOPOLYMERS ZUM SCHUTZ VON TEILEN AUS METALL

USE OF A BLOCK COPOLYMER FOR PROTECTING PARTS MADE FROM METAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2014 FR 1459013**

(43) Date de publication de la demande:
**02.08.2017 Bulletin 2017/31**

(73) Titulaires:
• **Arkema France**
**92700 Colombes (FR)**
• **Compagnie Générale des Etablissements Michelin**
**63000 Clermont-Ferrand (FR)**

(72) Inventeur: **PINEAU, Quentin**
**F-27000 Evreux (FR)**

(74) Mandataire: **Casalonga**
**Casalonga & Partners**
**Bayerstraße 71/73**
**80335 München (DE)**

(56) Documents cités:
**WO-A1-97/00293     WO-A1-2012/080404**
**FR-A1- 2 510 121     GB-A- 2 262 939**
**US-A- 4 018 731     US-A- 5 455 309**
**US-A1- 2012 000 541**

• **P. PETROV ET AL:**
**"Polyamide-6-b-polybutadiene block copolymers: Synthesis and properties",**
**JOURNAL OF APPLIED POLYMER SCIENCE, vol. 89, no. 3, 18 juillet 2003 (2003-07-18), pages 711-717, XP055189300, ISSN: 0021-8995, DOI: 10.1002/app.12195**
• **Jürgen Falde: "Römp Chemie Lexikon" In: "Römp Chemie Lexikon", 20 February 1995 (1995-02-20), XP055672328, pages 3559-3559,**

**Description**

L'invention se rapporte à une utilisation d'un copolymère à blocs de structure spécifique comprenant au moins un bloc polyamide, au moins un bloc polyoléfine particulier et au moins un bloc alkylène spécifique pour la protection de pièce comprenant du métal.

L'invention se rapporte également à un copolymère à blocs de structure spécifique comprenant au moins un bloc polyamide, au moins un bloc polyoléfine particulier et au moins un bloc alkylène spécifique, son procédé de préparation, une composition le contenant, et un procédé de mise en œuvre de la composition

L'invention porte enfin sur une pièce enduite par la composition comprenant le copolymère à blocs selon l'invention.

Dans des domaines très divers, des pièces ou structures métalliques sont exposées à des agressions externes sur une très longue période, que ce soit des pièces métalliques exposées à l'air, à la surface de l'eau ou bien sous l'eau. Par exemple des câbles de suspension de pont sont exposés à de grandes différences de température. Des coques ou hélices de bateaux sont exposées à de longues périodes dans de l'eau salée à des températures diverses. Des conduites ou pipelines utilisées dans le domaine off-shore sont, elles aussi exposées à de longues périodes dans de l'eau salée et à des pressions extrêmes.

Dans ces domaines spécifiques, les structures métalliques ont une durée de vie longue et doivent présenter une résistance à la corrosion efficace et durable.

Depuis de longues dates, il est recherché des moyens pour améliorer la résistance à la corrosion. Des voies différentes ont été exploitées pour résoudre ce problème technique. Des recherches ont été menées sur la structure des matériaux métalliques en eux-mêmes. Des traitements anti-corrosion, que le matériau a subis avant son installation ont également été développés, comme les traitements au chrome ou au phosphate. Une dernière approche consiste en l'application sur la pièce métallique d'un revêtement.

Dans le domaine de revêtement de pièces métalliques, des progrès restent encore à réaliser, car le matériau recherché doit répondre à un certain nombre de critères. Il doit parfaitement adhérer à la pièce métallique : l'adhérence doit être forte et durable.

Le revêtement doit ensuite présenter une résistance à la corrosion efficace et durable.

Enfin, selon les applications, le revêtement doit pouvoir accueillir un revêtement supplémentaire. Dans ce contexte, le revêtement recherché doit pouvoir présenter une adhérence forte et durable avec un matériau autre qu'une pièce métallique.

Des copolymères à blocs ont été développés, comme on peut notamment le voir dans le brevet US 4 018 731. Néanmoins, lesdits copolymères ne sont pas satisfaisants.

La Demanderesse a découvert que des copolymères à blocs de structure particulière résolvaient le problème technique posé.

Lesdits copolymères à blocs sont des copolymères thermoplastiques et ne sont pas des caoutchoucs. En d'autres termes, le copolymère à bloc n'est pas réticulé et ne peut donc être un caoutchouc.

Elle a pu remarquer que ces copolymères, qui conduisaient à cette double performance : bonne adhérence vis-à-vis des pièces métalliques et bonnes propriétés anti-corrosion, présentaient également une bonne capacité d'adhérence vis-à-vis d'autres pièces plastiques.

La présente invention a donc pour objet une utilisation d'un copolymère à blocs comportant

- au moins un bloc polyamide et
- au moins un bloc polyoléfine, ladite polyoléfine étant un homopolymère ou copolymère comprenant un ou plusieurs motifs oléfines, ledit bloc polyoléfine présentant une viscosité inférieure à 60 000 cps, la viscosité étant mesurée à 25°C avec un appareil de Brookfield et selon la méthode Brookfield, et
- au moins un bloc alkylène, issu de la polycondensation d'un diacide en $C_8$-$C_{36}$, étant une chaîne aliphatique, linéaire, saturée, ledit copolymère à blocs étant de formule suivante

$$PA\text{-}(R\text{-}Pol\text{-}PA)n\text{-}R\text{-}Pol\text{-}R\text{-}PA$$

Avec n compris entre 0 et 100, en particulier de 0 à 10, de préférence 0 ou 1,

PA désignant le bloc polyamide,
R désignant le bloc alkylène,
Pol désignant le bloc polyoléfine,
pour conférer des propriétés anti-corrosion et d'adhérence à une pièce comprenant une comprenant du métal, dont ladite partie est enduite par ledit copolymère.

L'invention a également pour objet un copolymère à blocs comportant

- au moins un bloc polyamide
- au moins un bloc polyoléfine, ladite polyoléfine étant un homopolymère ou copolymère comprenant un ou plusieurs motifs oléfines, ledit bloc polyoléfine présentant une viscosité inférieure à 60 000 cps, la viscosité étant mesurée à 25°C avec un appareil de Brookfield et selon la méthode Brookfield, et
- au moins un bloc alkylène, issu de la polycondensation d'un diacide en $C_8$-$C_{36}$, étant une chaîne aliphatique, linéaire, saturée, ledit copolymère à blocs étant de formule suivante

$$PA\text{-}(R\text{-}Pol\text{-}PA)n\text{-}R\text{-}Pol\text{-}R\text{-}PA$$

Avec n compris entre 0 et 100, en particulier de 0 à 10, de préférence 0 ou 1,

PA désignant le bloc polyamide,
R désignant le bloc alkylène,
Pol désignant le bloc polyoléfine.

L'invention porte sur un procédé de préparation d'un tel copolymère à blocs.
L'invention porte également sur une composition comportant au moins un tel copolymère à blocs.
L'invention porte sur un procédé de mise en œuvre de ladite composition.
L'invention porte enfin sur une pièce enduite par la composition.
D'autres caractéristiques, aspects, objets et avantages de la présente invention apparaîtront encore plus clairement à la lecture de la description et des exemples qui suivent.
Il est précisé que l'expression "compris entre" utilisée dans la suite de la présente description, doit s'entendre comme incluant chacune des bornes mentionnées.

*Utilisation*

L'invention porte sur l'utilisation d'un copolymère à blocs tel que défini ci-dessus pour la protection de pièce constituée en tout ou partie de métal.
De préférence, l'invention porte sur cette utilisation pour conférer au matériau à base de métal, sur lequel il est appliqué, des propriétés d'adhérence et anti-corrosion.
Il a été observé de façon inattendue que ces copolymères à blocs, de structure spécifique, présentaient une affinité pour les surfaces métalliques ou contenant du métal.
Les copolymères utiles selon l'invention présentent une excellente adhérence sur ce type de surface.
Ils présentent également l'avantage de protéger les surfaces enduites de la corrosion et de toutes les agressions externes que peuvent subir ces surfaces.
Ces copolymères sont des copolymères thermoplastiques et ne sont pas des caoutchoucs.
Par matériau à base de métal, on entend au sens de la présente invention des éléments métalliques façonnés en tout ou partie de métal ou encore des matériaux plastiques ou élastiques comportant des fibres métalliques.
Par conséquent, l'utilisation selon l'invention vise à conférer des propriétés anti-corrosion et d'adhérence à une pièce comprenant une partie comprenant du métal, dont ladite partie est enduite par ledit copolymère.
Elle vise également à conférer à la partie enduite une adhérence à des matériaux plastiques ou élastiques.
Ces éléments peuvent avoir des formes très diverses : de câble, de filin, d'un tube, d'un récipient, d'un film ou d'une plaque, de préférence d'un tube,

*Copolymère à blocs*

Le copolymère à blocs utile selon la présente invention comporte :

- au moins un bloc polyamide et
- au moins un bloc polyoléfine, ladite polyoléfine étant un homopolymère ou copolymère comprenant un ou plusieurs motifs oléfines, ledit bloc polyoléfine présentant une viscosité inférieure à 60 000 cps, la viscosité étant mesurée à 25°C avec un appareil de Brookfield et selon la méthode Brookfield, et
- au moins un bloc alkylène, issu de la polycondensation d'un diacide en $C_8$-$C_{36}$, étant une chaîne aliphatique, linéaire, saturée, ledit copolymère à blocs étant de formule suivante

PA-(R-Pol-PA)n-R-Pol-R-PA

Avec n compris entre 0 et 100, en particulier de 0 à 10, de préférence 0 ou 1,

PA désignant le bloc polyamide,
R désignant le bloc alkylène,
Pol désignant le bloc polyoléfine.

La structure de ces blocs est décrite ci-dessous.

*Bloc polyamide*

La nomenclature utilisée pour définir les polyamides est décrite dans la norme ISO 1874-1:1992 "Plastiques - - Matériaux polyamides (PA) pour moulage et extrusion -- Partie 1: Désignation", notamment en page 3 (tableaux 1 et 2) et est bien connue de l'homme du métier.

Le bloc polyamide selon la présente invention peut avoir une structure homopolyamide ou copolyamide.

Par homopolyamide, au sens de la présente invention, on entend un polyamide, qui n'est constitué que de la répétition d'une unique unité.

Par copolyamide, au sens de la présente invention, on entend un polyamide, qui est constitué de la répétition d'au moins deux unités de structure chimique différente. Ce copolyamide peut présenter une structure aléatoire, alternée ou à blocs.

Le bloc polyamide selon la présente invention peut comprendre une ou plusieurs unités de structure choisie parmi les amino-acides, les lactames et les unités (diamine).(diacide).

Lorsque le polyamide comporte un aminoacide dans sa structure, il peut être choisi parmi l'acide 9-aminononanoïque (A=9), l'acide 10-aminodécanoïque (A=10), l'acide 10-aminoundécanoïque (A=11), l'acide 12-aminododécanoïque (A=12) et l'acide 11-aminoundécanoïque (A=11) ainsi que ses dérivés, notamment l'acide N-heptyl-11-aminoundécanoïque, A désignant le nombre d'atomes de carbone dans le motif.

Lorsque le polyamide comporte un lactame, il peut être choisi parmi la pyrrolidinone, la 2-pipéridinone, le caprolactame, l'énantholactame, le caprylolactame, le pelargolactame, le décanolactame, l'undecanolactame, et le lauryllactame (A=12).

Lorsque le polyamide comporte est un motif répondant à la formule (diamine en Ca).(diacide en Cb) Ca et Cb désignant le nombre d'atomes de carbone respectivement dans la diamine et le diacide, le motif (diamine en Ca) est choisi parmi les diamines aliphatiques, linéaires ou ramifiés, les diamines cycloaliphatiques et les diamines alkylaromatiques.

Lorsque la diamine est aliphatique et linéaire, de formule $H_2N\text{-}(CH_2)_a\text{-}NH_2$, le monomère (diamine en Ca) est préférentiellement choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine, la 2-methyl-1,8-octanediamine.

Lorsque le monomère (diamine en Ca) est cycloaliphatique, il est choisi parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP), l'isophoronediamine (a=10), la pipérazine (a=4), l'amino-éthylpipérazine. Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Aminés" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.

Le motif (diacide en Cb) est choisi parmi les diacides aliphatiques, linéaires ou ramifiés, les diacides cycloaliphatiques et les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est choisi parmi l'acide téréphtalique (noté T), isophtalique (noté I) et les diacides naphtaléniques.

De préférence, le boc polyamide dans le copolymère à blocs utile selon l'invention est choisi parmi PA 6, PA 11, PA12, PA 6.10, PA 6.6, PA 6.12, PA 10.10, PA 10.12, PA 11/10.T, PA 11/6.T, 12/10.T, 6.10/10.T, 6.12/10.T, 10.10/10.T, 10.12/10.T, 11/6.T/10.T, 12.12/10.T, 12/6.10/10.T, 12/6.12/10.T, 12/10.10/10.T, 12/10.12/10.T et 12/12.12/10.T.

De préférence, le bloc polyamide présente une masse moléculaire en nombre mesurée par potentiométrie comprise entre 600 et 20 000, de préférence entre 4 000 et 10 000 g/mol.

De préférence, le copolymère à blocs selon l'invention comporte une teneur en bloc polyamide comprise entre 2 et 98%, de préférence entre 30 et 95%, de manière plus préférée entre 50 et 94%, préférentiellement entre 70 et 92% et de manière encore plus préférée entre 75 et 90% en poids par rapport au poids total du copolymère à blocs.

### Terminaisons de chaîne

Le ou les blocs polyamides se terminent par des fonctions amine, acide, isocyanate et anhydride.

### Bloc polyoléfine

On entend par polyoléfine, un homopolymère ou copolymère comprenant un ou plusieurs motifs oléfines tels que des motifs éthylène, propylène, butène-1, octène-1, butadiène, ou toute autre alpha-oléfine, ledit bloc polyoléfine présentant une viscosité inférieure à 60 000 cps, la viscosité étant mesurée à 25°C avec un appareil de Brookfield et selon la méthode Brookfield. A titre d'exemple de polyoléfine, on peut citer le polyéthylène et, notamment, le polyéthylène basse densité (LDPE), le polyéthylène haute densité (HDPE), le polyéthylène à basse densité linéaire (LLDPE) et le polyéthylène très basse densité (VLDPE) ; le polypropylène ; les copolymères éthylène/propylène ; les polyoléfines élastomères comme l'éthylène-propylène (EPR ou EPM) ou l'éthylène-propylène-diène monomère (EPDM) ; ou encore les polyéthylènes métallocènes obtenus par catalyse monosite.

Avantageusement, on entend par polyoléfine, un homopolymère ou copolymère comprenant un ou plusieurs motifs oléfines tels que des motifs éthylène, propylène, butène-1, octène-1, butadiène, ou toute autre alpha-oléfine, à l'exclusion d'isoprène, chloré ou non.

De préférence, le bloc polyoléfine est un bloc polybutadiène.

Il peut comporter des séquences 1,4 cis, 1,4 trans ou 1,2 ou un mélange de celles-ci. De préférence, le polybutadiène comporte majoritairement des séquences en 1,2.

Le copolymère à blocs comprend une teneur en bloc polyoléfine comprise entre 2 et 98%, de préférence entre 5 et 70, de manière plus préférée entre 6 et 50%, préférentiellement entre 8 et 30, et de manière encore plus préférée entre 10 et 25 % en poids par rapport au poids total du copolymère à blocs (bornes comprises).

### Terminaisons de chaîne

Le ou les blocs polypolyoléfine peuvent se terminer par une des fonctions choisies parmi amine, acide, alcool, isocyanate et anhydride.

De manière encore préférée, le bloc polypolyoléfine est un bloc polybutadiène, terminé par des fonctions alcools.

Le produit de dénomination commerciale Krasol® ou Poly Bd® commercialisé par la société Cray Valley peut être utilisé. Avantageusement, le bloc polyoléfine est un bloc polybutadiène, terminé par des fonctions alcools, avec une teneur comprise entre 2 et 98%, de préférence entre 5 et 70, de manière plus préférée entre 6 et 50%, préférentiellement entre 8 et 30, et de manière encore plus préférée entre 10 et 25 % en poids par rapport au poids total du copolymère à blocs (bornes comprises).

*Propriétés physico-chimiques du bloc polyoléfine*

Le bloc polyoléfine présente une viscosité inférieure à 60 000 cps, de préférence inférieure à 40 000 cps, et de préférence inférieure à 20 000 cps et de façon encore préférentielle entre 1 000 et 20 000 cps, la viscosité étant mesurée à 25°C avec un appareil de Brookfield et selon la méthode Brookfield.

Avantageusement, le bloc polyoléfine a une masse moléculaire en nombre comprise entre 1000 et 10000, en particulier entre 1000 et 4000.

*Liaisons intermédiaires entre les blocs*

Le ou les blocs polyamides et polyoléfines peuvent se terminer par des fonctions choisies parmi amine, acide, isocyanate, alcool et anhydride. Le ou les blocs polyoléfines et polyamides sont modifiés de manière à se terminer par ces fonctions.

Par conséquent, les liaisons entre les blocs peuvent être des fonctions ester, amide, urée et/ou uréthane.

*Bloc alkylène*

Les copolymères à blocs utiles selon l'invention comportent dans leur structure au moins un bloc alkylène, issu de la polycondensation d'un diacide en $C_8$-$C_{36}$, étant une chaîne aliphatique, linéaire, saturée.

De préférence, le bloc alkylène est issu de la polycondensation d'un diacide en $C_{10}$-$C_{36}$.

Plus particulièrement, le bloc alkylène est issu de la polycondensation d'un diacide gras en $C_8$-$C_{36}$.

Plus particulièrement, le bloc alkylène est issu de la polycondensation d'un dimère d'acide gras ou encore d'un acide gras dimérisé en $C_8$-$C_{36}$.

Le produit de dénomination commerciale Pripol® commercialisé par la société Croda peut être utilisé.

Le produit de dénomination commerciale Empol® commercialisé par la société Cognis peut être utilisé.

Le produit de dénomination commerciale Unydime® commercialisé par la société Arizona Chemical peut être utilisé.

Le produit de dénomination commerciale Radiacid® commercialisé par la société Oleon peut être utilisé.

Le copolymère à blocs selon l'invention est de formule suivante :

PA-(R-Pol-PA)n-R-Pol-R-PA

Avec n compris entre 0 et 100, en particulier de 0 à 10, de préférence 0 ou 1.

PA, R et Pol étant tels que définis ci-dessus.

De préférence, le copolymère à blocs selon l'invention comporte une teneur en bloc alkylène comprise entre 0,1 et 25%, de préférence entre 1 et 15% en poids par rapport au poids total du copolymère à blocs.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 10 et 25%, en poids par rapport au poids total du copolymère à blocs, la somme étant égale à 100%.

Avantageusement, dans le copolymère à bloc selon l'invention comprenant un bloc polyamide, un bloc polyoléfine et un bloc alkylène tel que défini ci-dessus, le bloc polyoléfine est un polybutadiène.

Avantageusement, dans le copolymère à bloc selon l'invention comprenant un bloc polyamide, un bloc polyoléfine et un bloc alkylène tel que défini ci-dessus, le bloc polyoléfine est un polybutadiène terminé par des fonctions alcools.

Avantageusement, dans le copolymère à bloc selon l'invention comprenant un bloc polyamide, un bloc polyoléfine et un bloc alkylène tel que défini ci-dessus, le bloc polyoléfine est un polybutadiène et le bloc alkylène est issu de la polycondensation d'un diacide en $C_8$-$C_{36}$, en particulier de $C_{10}$-$C_{36}$.

Avantageusement, dans le copolymère à bloc selon l'invention comprenant un bloc polyamide, un bloc polyoléfine et un bloc alkylène tel que défini ci-dessus, le bloc polyoléfine est un polybutadiène et le bloc alkylène est issu de la polycondensation d'un diacide gras en $C_8$-$C_{36}$.

Avantageusement, dans le copolymère à bloc selon l'invention comprenant un bloc polyamide, un bloc polyoléfine et un bloc alkylène tel que défini ci-dessus, le bloc polyoléfine est un polybutadiène et le bloc alkylène est issu de la polycondensation d'un dimère d'acide gras en $C_8$-$C_{36}$.

Avantageusement, dans le copolymère à bloc selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est issu de la polycondensation un diacide en $C_8$-$C_{36}$, en particulier de $C_{10}$-$C_{36}$.

Avantageusement, dans le copolymère à bloc selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est issu de la polycondensation d'un diacide gras en $C_8$-$C_{36}$.

Avantageusement, dans le copolymère à bloc selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est issu de la polycondensation d'un dimère d'acide gras en $C_8$-$C_{36}$.

*Bloc allongeur de chaîne*

Le copolymère à blocs selon l'invention peut comprendre éventuellement au moins un bloc allongeur de chaîne.

Ce bloc allongeur de chaîne est de structure :

Y1-A'-Y1

avec A' étant un biradical hydrocarboné de structure non polymérique (ni polymère, ni oligomère, ni prépolymère), porteur de 2 fonctions réactives terminales Y1 identiques, réactives par polyaddition (sans élimination de sous-produit de réaction), avec au moins une fonction en fin de chaîne du copolymère à bloc selon l'invention, de préférence de masse moléculaire en nombre inférieure à 500 et plus préférentiellement inférieure à 400,
en particulier Y1 est choisi parmi: oxazine, oxazoline, oxazolinone, oxazinone, imidazoline, époxy, isocyanate, maléimide, anhydride cyclique.

Comme exemples convenables d'allongeurs de chaîne, on peut citer les suivants :

-   lorsque les terminaisons de chaîne sont des fonctions NH2 ou OH, de préférence NH2, l'allongeur de chaîne Y1-A'-Y1 correspond à :
    Y1 choisi parmi les groupements : maléimide, isocyanate éventuellement bloqué, oxazinone et oxazolinone, anhydride cyclique, de préférence oxazinone et oxazolinone et

A' est un espaceur carboné ou radical carboné portant les fonctions ou groupements réactifs Y1, choisi parmi :

- une liaison covalente entre deux fonctions (groupements) Y dans le cas où Y1 = oxazinone et oxazolinone ou
- une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire en nombre de 14 à 200 g.mol-1,

L'allongeur de chaîne Y1-A'-Y1 peut également correspondre à une structure dans laquelle

Y1 est un groupement caprolactame et
A' est un radical carbonyle tel que le carbonyl biscaprolactame ou à A' pouvant être un téréphtaloyle ou un isophtaloyle,
L'allongeur de chaîne Y1-A'-Y1 peut également porter un groupement Y1 d'anhydride cyclique et de préférence cet allongeur est choisi parmi un dianhydride carboxylique cycloaliphatique et/ou aromatique et plus préférentiellement il est choisi parmi le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
et

- lorsque les terminaisons de chaîne sont des fonctions COOH

ledit allongeur de chaîne Y1-A'-Y1 correspond à :

Y1 choisi parmi les groupements : oxazoline, oxazine, imidazoline, aziridine, comme le 1, l'-iso- ou téré- phtaloyl-bis (2-methyl aziridine) ou epoxy,
A' étant un espaceur (radical) carboné tel que défini ci-dessus.

Plus particulièrement, quand dans ledit allongeur Y1-A'-Y1, ladite fonction Y1 est choisie parmi oxazinone, oxazolinone, oxazine, oxazoline ou imidazoline, en particulier oxazoline, dans ce cas, dans l'allongeur de chaîne représenté par Y1-A'-Y1, A' peut représenter un alkylène tel que -(CH2)m- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas où Y1 est un époxy, l'allongeur de chaîne peut être choisi parmi les bisphenol A diglycidyl éther (DGEBA), et son dérivé hydrogéné (cycloaliphatique) bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn <500, polypropylène glycol diglycidyl éther de Mn <500, polytétraméthylène glycol diglycidyl éther de Mn <500, résorcinol diglycidyl éther, néopentylglycol diglycidyl éther, bisphenol A polyéthylène glycol diglycidyl éther de Mn <500, bisphénol A polypropylèneglycol diglycidyl éther de Mn <500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2-Cyclohexanedicarboxylate, et leurs mélanges.

Dans le cas du carbonyl- ou térephtaloyl- ou isophtaloyl-biscaprolactame comme allongeur de chaîne Y1-A'-Y1, les conditions préférées évitent l'élimination de sous-produit, comme le caprolactame lors de ladite polymérisation et mise en œuvre à l'état fondu.

Dans le cas éventuel cité ci-haut où Y1 représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec des fonctions NH2 issues du copolymère à blocs, les conditions préférées évitent toute formation de cycle imide lors de la polymérisation et lors la mise en œuvre à l'état fondu.

Pour les terminaisons OH ou NH2 du copolymère à bloc, le groupement Y1 est choisi de préférence parmi : isocyanate (non bloqué), oxazinone et oxazolinone, plus préférentiellement oxazinone et oxazolinone, avec comme espaceur (radical) A' étant comme défini ci-haut.

Comme exemples d'allongeurs de chaîne portant des fonctions réactives Y oxazoline ou oxazine convenables à la mise en œuvre de l'invention, on pourra se référer à ceux décrits sous références « A », « B », « C » et « D » à la page 7 de la demande EP 0 581 642, ainsi qu'à leurs procédés de préparation et leurs modes de réaction qui y sont exposés. « A » dans ce document est la bisoxazoline, « B » la bisoxazine, « C » la 1,3 phénylène bisoxazoline et « D » la 1,4-phénylène bisoxazoline.

A titre d'exemple, dans le cas où les terminaisons CO2H du copolymère à blocs et l'allongeur de chaîne Y1-A'-Y1 est la 1,4-phénylène bisoxazoline, le produit de réaction obtenu possède au moins un motif récurrent de structure suivante :

$$-O-C(O)-PA-C(O)-O-R1-NH-C(O)-A'-C(O)-NH-R1-$$

dans laquelle :

PA est un polyamide à terminaisons acides HO-C(O)-PA-C(O)-OH tel que défini ci-dessus,
R1 $(CH_2)_2$, et
A' est un phényle.

Comme exemples d'allongeurs de chaîne à fonction réactive Y1 imidazoline convenables à la mise en œuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y1 = oxazinone ou oxazolinone qui conviennent à la mise en œuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y1 oxazinones (cycle à 6 atomes) et oxazolinones (cycle à 5 atomes) convenables, on peut citer les groupements Y1 dérivés de : benzoxazinone d'oxazinone ou d'oxazolinone, avec comme espaceur A' pouvant être une simple liaison covalente avec pour allongeurs correspondants respectifs étant : bis-(benzoxazinone), bisoxazinone et bisoxazolinone.

A' peut être également un alkylène en C1 à C14, de préférence en C2 à C10 mais de préférence A' est un arylène et plus particulièrement il peut être un phénylène (substitué par Y1 en positions 1,2 ou 1,3 ou 1,4) ou un radical naphtalène (disubstitué par Y1) ou un phtaloyle (iso- ou téréphtaloyle) ou A' peut être un cycloalkylène.

Pour les fonctions Y1 comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C1 à C14, de préférence en C2 à C10. Le radical A' est de préférence un arylène et, plus particulièrement, il peut être un phénylène (substitué par Y1 en positions 1,2 ou 1,3 ou 1,4) ou un radical naphtalène (disubstitué par Y1) ou un phtaloyle (iso- ou téréphtaloyle) ou A' peut être un cycloalkylène.

Dans le cas où Y1 = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, la 1, 1' isophtaloyl-bis(2-méthyl aziridine).

La présence d'un catalyseur de la réaction entre le copolymère à bloc et ledit allongeur Y1-A'-Y1 à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène, tel que $-(CH_2)_m-$ avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

Comme déjà précisé, ledit allongeur de chaîne (a2) a une structure non polymérique et de préférence une masse moléculaire en nombre inférieure à 500, plus préférentiellement inférieure à 400.

De préférence, le copolymère à blocs selon l'invention comporte au moins un bloc allongeur de chaîne situé à une ou plusieurs extrémités polyamide du copolymère.

Le taux dedit allongeur dans le dit copolymère à blocs varie de 1 à 20%, en particulier de 5 à 20% en poids.

Avantageusement, le copolymère à blocs selon l'invention comprenant (ou constitué de) un bloc polyamide et un bloc polyoléfine, a une teneur en bloc polyamide comprise entre 2 et 98% en poids par rapport au poids total du copolymère à blocs, une teneur en bloc polyoléfine comprise entre 2 et 98% en poids par rapport au poids total du copolymère à blocs et un taux dedit allongeur de 1 à 20% par rapport au poids total du copolymère à blocs, le total étant égal à 100%.

Avantageusement, dans ce dernier copolymère à blocs selon l'invention, ledit allongeur est isocyanate (non bloqué), oxazinone et oxazolinone, plus préférentiellement oxazinone et oxazolinone, avec comme espaceur (radical) A' étant comme défini ci-haut.

Avantageusement, le copolymère à blocs selon l'invention comprenant (ou constitué de) un bloc polyamide et un bloc polyoléfine, a une teneur en bloc polyamide comprise entre 2 et 98% en poids par rapport au poids total du copolymère à blocs, une teneur en bloc polyoléfine comprise entre 2 et 98% en poids par rapport au poids total du copolymère à blocs et un taux dedit allongeur de 5 à 20% par rapport au poids total du copolymère à blocs, le total étant égal à 100%.

Avantageusement, dans ce dernier copolymère à blocs selon l'invention, ledit allongeur est isocyanate (non bloqué), oxazinone et oxazolinone, plus préférentiellement oxazinone et oxazolinone, avec comme espaceur (radical) A' étant comme défini ci-haut.

Avantageusement, dans le copolymère à bloc selon l'invention comprenant (ou constitué de) un bloc polyamide, un bloc alkylène et un bloc polyoléfine tel que défini ci-dessus, le taux dedit allongeur de 1 à 20% par rapport au poids total du copolymère à blocs, le total étant égal à 100%.

Avantageusement, dans ce dernier copolymère à blocs selon l'invention, ledit allongeur est isocyanate (non bloqué), oxazinone et oxazolinone, plus préférentiellement oxazinone et oxazolinone, avec comme espaceur (radical) A' étant comme défini ci-haut.

Avantageusement, dans le copolymère à bloc selon l'invention comprenant (ou constitué de) un bloc polyamide, un bloc alkylène et un bloc polyoléfine tel que défini ci-dessus, le taux dedit allongeur de 5 à 20% par rapport au poids total du copolymère à blocs, le total étant égal à 100%.

Avantageusement, dans ce dernier copolymère à blocs selon l'invention, ledit allongeur est isocyanate (non bloqué), oxazinone et oxazolinone, plus préférentiellement oxazinone et oxazolinone, avec comme espaceur (radical) A' étant comme défini ci-haut.

*Copolymère à blocs*

Le copolymère à blocs selon l'invention comporte :

- au moins un bloc polyamide, tel que défini ci-dessus,
- au moins un bloc polyoléfine, tel que défini ci-dessus, et
- au moins un bloc alkylène, tel que défini ci-dessus.

*Proportions des blocs*

De préférence, le copolymère à blocs selon l'invention comporte

- une teneur en bloc polyamide comprise entre 2 et 98% en poids par rapport au poids total du copolymères à blocs,
- une teneur en bloc polyoléfine comprise entre 2 et 98% en poids par rapport au poids total du copolymère à blocs.

De préférence, le copolymère à blocs selon l'invention comporte :

- une teneur en bloc polyamide comprise entre 2 et 98% en poids par rapport au poids total du copolymère à blocs,
- une teneur en bloc polyoléfine comprise entre 2 et 98% en poids par rapport au poids total du copolymère à blocs,
- une teneur en bloc alkylène comprise entre 0,1 et 25%, de préférence entre 1 et 15% en poids par rapport au poids total du copolymères à blocs.

Cependant, toutes les combinaisons de copolymères à blocs comprenant un bloc polyamide, un bloc polyoléfine et un bloc alkylène ou comprenant un bloc polyamide, un bloc polyoléfine, un bloc alkylène et un allongeur de chaîne, définies ci-dessus dans la partie « Utilisation » sont également selon l'invention pour cette partie

*« Copolymère à blocs ».*

Le copolymère à blocs selon l'invention est un copolymère thermoplastique et n'est pas un caoutchouc.

*Procédé de préparation du copolymère à blocs*

L'invention porte également sur un procédé de préparation du copolymère à blocs selon l'invention.

Le procédé de préparation du copolymère selon l'invention comprend une étape de mélange des différents blocs.

De préférence, le procédé comprend les étapes successives suivantes :

- une étape de mélange des blocs polyoléfines et alkylène, le rapport molaire entre des blocs polyoléfines et les blocs alkylène étant supérieur ou égal à ½, puis
- une étape de mélange des blocs polyamides avec le mélange obtenu à l'étape précédente.

Le procédé de préparation peut comprendre une étape supplémentaire de mélange de blocs allongeur de chaine tel que défini ci-dessus avec le mélange obtenu à l'étape précédente.

*Composition*

L'invention porte également sur une composition comportant le copolymère à blocs selon l'invention.

De préférence, la composition se trouve sous forme de poudre ou de granulés.

*Les additifs*

La composition selon l'invention peut également comprendre en outre au moins un additif.

Cet additif peut notamment être choisi parmi les adjuvants aidant à la transformation (ou processing aids), les charges, les stabilisants thermiques, comme les stabilisants thermiques organiques à base de phosphite, les stabilisants thermiques à base de cuivre, les colorants, les agents de démoulage, les agents d'ignifugation, les agents tensio-actifs, les azurants optiques, les anti-oxydants, tels que ceux à base de phénol ou le produit commercialisé sous la dénomination Naugard 445® commercialisé par la société CHEMTURA, les anti-UV tels que les HALS et leurs mélanges. De préférence, les colorants sont présents en une proportion de 0 à 1,5%, notamment de 0,5 à 1% en poids par rapport au poids total de la composition. De préférence, les stabilisants thermiques sont présents en une proportion de 0 à 2%, notamment de 0,5 à 1% en poids par rapport au poids total de la composition et les antioxydants sont présents en proportion de 0 à 2%, notamment de 0,5 à 1% en poids par rapport au poids total de la composition.

La composition peut également comprendre des catalyseurs, tels que de l'acide phosphorique, hypophosphoreux ($H_3PO_2$, $H_3PO_3$ et $H_3PO_4$).

Parmi les adjuvants aidant à la transformation ou processing aids, on peut citer les stéarates, tels que les stéarates de calcium ou de zinc, les cires naturelles, les polymères comprenant du tétrafluoroéthylène (TFE).

La proportion pondérale en processing aids est classiquement comprise entre 0,01 et 0,3% en poids, avantageusement entre 0,02 et 0,1% en poids, par rapport au poids total de la composition.

Parmi les charges, on peut citer la silice, le graphite, le graphite expansé, le noir de carbone, les billes de verre, le kaolin, la magnésie, les scories, le talc, les nanocharges (nanotubes de carbone), les pigments, oxydes métalliques (oxyde de titane), les métaux, les fibres (aramides, de verre, de carbone).

En fonction de la nature des charges, la quantité de ces dernières peut représenter jusqu'à 30% en poids, du poids total de la composition.

*Les polymères supplémentaires*

Une composition conforme à l'invention peut en outre comprendre un ou plusieurs polymères supplémentaires, un tel polymère étant distinct du (des) copolymère(s) à blocs mentionnés ci-avant.

Avantageusement, ce polymère supplémentaire peut notamment être choisi parmi un copolymère à blocs autre que celui défini précédemment, un polyamide, un polyamide-bloc-éther, un polyétheramide, un polyesteramide, un polysulfure de phénylène (PPS), un polyphénylène oxyde (PPO), un polymère fluoré, un caoutchouc naturel, un caoutchouc synthétique et leurs mélanges.

Le polymère supplémentaire peut également être choisi parmi l'amidon, qui peut être modifié et/ou formulé, la cellulose ou ses dérivés comme l'acétate de cellulose ou les éthers de cellulose, le polyacide lactique, le polyacide glycolique et les polyhydroxyalcanoates.

De préférence, le polymère supplémentaire est choisi parmi les polyamides aliphatiques et les polyamides-bloc-éthers. Parmi les polyamides aliphatiques, on peut notamment citer les polyamides à longue chaîne tels que les PA11, PA12, PA6.10, PA6.12, PA6.14, PA10.10, PA10.12 et PA12.12.

La composition peut ainsi contenir jusqu'à 20% en poids, par rapport au poids total de la composition, d'au moins un polymère supplémentaire.

*Procédé de préparation de la composition*

L'invention porte également sur le procédé de préparation de la composition selon l'invention.

Ce procédé comprend une étape d'incorporation des éventuels additifs et polymères supplémentaires au sein de la matrice du copolymère à blocs.

*Procédé de mise en œuvre de la composition ou du*

*copolymère à bloc*

L'invention porte également sur un procédé de mise en œuvre de la composition selon l'invention. Ce procédé comprend une étape d'injection, d'extrusion ou de pulvérisation de la composition.

*Pièce enduite*

L'invention porte enfin sur la pièce, comprenant

- au moins une partie comprenant du métal et
- une composition telle que définie ci-dessus, ladite composition étant appliquée sur ladite partie.

En d'autres termes, la pièce comprenant du métal est enduite ou recouverte (en lange anglaise : coated) par la composition selon l'invention.

Il est possible que la pièce soit métallique dans sa totalité, ou bien seulement en partie. La zone enduite doit comporter du métal pour être protéger de la corrosion.

Selon un autre mode de réalisation de l'invention, la pièce peut comprendre une deuxième partie, différente de la première, la composition étant interposée et en contact avec les deux parties.

Ainsi, cette pièce peut correspondre à une structure multi-couche, dans laquelle la composition selon l'invention constituerait une couche intermédiaire en contact direct avec la pièce.

Par exemple, la pièce selon l'invention peut être un tube métallique enduit d'une composition selon l'invention, recouvert ensuite par une seconde couche en PA11.

Les pièces enduites décrites ci-dessus peuvent se présenter sous la forme d'un câbles, d'un filin, d'un tube, d'un récipient, d'un film ou d'une plaque, de préférence d'un tube.

La pièce selon l'invention peut être utilisée pour le transport ou le stockage de fluides, en particulier présents dans les véhicules terrestres, navals de surface ou sous-marine, dans des plateformes sous-marines (off-shore) ou terrestres, pour les systèmes réfrigérants comme des climatisations stationnaires ou mobiles, tels que des réfrigérateurs industriels ou non, pour des systèmes d'air conditionnée stationnaires ou mobiles.

En particulier, le fluide est choisi parmi une huile, un liquide de frein, des solutions d'urée, des liquides de refroidissement à base de glycol, des carburants, et particulièrement des bio-carburants, et encore plus particulièrement les bio-diesels, de l'eau potable, des eaux usées , du gaz, de l'air, des fluides caloporteurs, du pétrole et ses dérivés.

FIGURES :

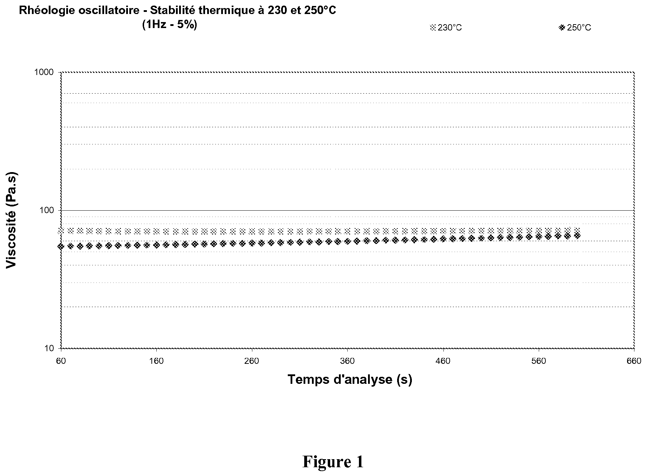

La figure 1 présente la stabilité thermique à 230°C (carrés) et 250°C (losange) de l'exemple 1 déterminée par rhéologie oscillatoire.

Axe des abscisses : temps d'analyse (s).
Axe des ordonnées : Viscosité (Pa.s)

Les exemples suivants servent à illustrer l'invention sans toutefois présenter un caractère limitatif.

EXEMPLES

1/Synthèse d'un copolymère selon l'invention

Exemple :

Le mélange de polybutadiène et de dimère d'acide gras en un rapport molaire de ½ (polybutadiène/dimère d'acide gras) est effectué.
Puis, le mélange obtenu est mélangé au polyamide comme décrit ci-dessous.

- Fabrication d'un bloc PA 11 diamine de masse moléculaire en nombre 5000 g/mol :
  dans un autoclave de 12L muni d'un agitateur type ancre, sont introduits 5000 g d'acide 11-aminoundecanoïque, 116.2g d'hexaméthylènediamine, et 750g d'eau déionisée. Le milieu est inerté à l'azote puis chauffé jusqu'à 210°C matière sous agitation. La pression est alors de 20 bars. Puis le milieu est chauffé jusqu'à 230°C matière en maintenant une pression de 20 bars. Lorsque cette température est atteinte, la pression est ramenée à pression atmosphérique par détente et un balayage sous azote est appliqué pendant 90 minutes.

Le produit obtenue est ainsi vidangé dans de l'azote liquide et récupéré sous forme de blocs.
Les fins de chaine sont dosées par potentiométrie :

$$NH2 = 0.399 \ meq/g$$

La Masse moléculaire est bien de 5000 g/mol.

• Fabrication d'un Pentabloc

Dans un autoclave de 12L muni d'un agitateur type ancre, sont introduits 761.9g de Krasol® LBH-P 2000 (viscosité 13000 cP, Mn = 2100, 438.1g de Pripol® 1013 (M=575 g/mol), 1.2g d'Irganox® 1098 et 1.2g d'acide phosphorique. Le milieu est agité et est porté à une température de 235°C sous vide pendant 3h. Le milieu est ramené à pression atmosphérique. 3800g du bloc préparé précédemment sont ajoutés et la réaction se déroule sous vide à 235°C pendant 90 min.
Le produit est ensuite vidangé dans l'eau et granulé.
Le dosage potentiométrique des fins de chaine :

$$NH2 = 0.18 \ meq/g$$

Dosage potentiométrique des fins de chaine amines
500 mg de polymère sont dissouts dans 80g de m-crésol à130°C pendant 1h.
De l'acide perchlorique 0.02N (dans l'acide acétique) est ajouté jusqu'à neutralisation des fins de chaine aminés. Cette neutralisation s'accompagne par une modification de potentiel, suivi à l'aide d'électrodes.

2/Tests et résultats

La stabilité thermique du copolymère synthétisé est évaluée par rhéologie oscillatoire.
Les résultats figurent dans le graphe de la figure 1 jointe.
Ce graphe montre l'évolution de la rhéologie du copolymère synthétisé à 230°C (tracé supérieur) et 250°C (tracé inférieur) pendant 600h.
Ce graphe montre que la rhéologie du copolymère évolue très peu. La pente de ces droites est très faible.
Le graphe montre que le copolymère présente une remarquable stabilité rhéologique à haute température.
3/ Evaluation de l'adhérence du copolymère pentabloc de l'invention (exemple 1 ci-dessus) sur un métal.
Le pentabloc de l'invention a été cryobroyé sur un broyeur Retsch ZM 200 en deux passages :

1- Grille 2mm 18000 trs/mn
2- Grille 1 mm 18000 trs/mn

puis appliqué en procédé trempage sur des éprouvettes brûlées et grenaillées.
Un BMNO (PA 11 produit par Arkema) a été broyé et appliqué dans les mêmes conditions.
La granulométrie des différents produits broyés est la suivante: D50 ~ 200$\mu$m.
Les applications ont été faites avec et sans postfusion.
Résultats :

| | Pentabloc de l'invention (exemple 1) | BMNO PA 11 |
|---|---|---|
| Application sans postfusion : **10 mn 330 °C trempe 4s puis refroidissement air ambiant** | | |
| Adhérence | 4 | 1 |
| Application avec Postfusion : 10 mn 330 °C trempe 4s puis postfusion 5mn 250°C puis refroidissement air ambiant | | |
| Adhérence | 4 | 0,5-1 |

L'adhérence métallique est testée par pelage manuel.

Les résultats de l'adhérence selon une échelle de 0,5-1 à 4 :

0,5-1 : N'adhère pas

2 : Adhérence moyenne

3 : Bonne adhérence

4 : Excellente adhérence.

L'adhérence du pentabloc selon l'invention est bien supérieure comparée à un polyamide seul tel que le BMNO que ce soit sans ou avec post fusion.

**Revendications**

1. Utilisation d'un copolymère à blocs comprenant

- au moins un bloc polyamide,
- au moins un bloc polyoléfine, ladite polyoléfine étant un homopolymère ou copolymère comprenant un ou plusieurs motifs oléfines, ledit bloc polyoléfine présentant une viscosité inférieure à 60 000 cps, la viscosité étant mesurée à 25°C avec un appareil de Brookfield et selon la méthode Brookfield, et
- au moins un bloc alkylène, issu de la polycondensation d'un diacide en $C_8$-$C_{36}$, étant une chaîne aliphatique, linéaire, saturée,
ledit copolymère à blocs étant de formule suivante

PA-(R-Pol-PA)n-R-Pol-R-PA

Avec n compris entre 0 et 100, en particulier de 0 à 10, de préférence 0 ou 1,
PA désignant le bloc polyamide,
R désignant le bloc alkylène,
Pol désignant le bloc polyoléfine,
ledit copolymère à blocs comprenant une teneur en bloc polyoléfine comprise entre 2 et 98% en poids par rapport au poids total du copolymère à blocs, bornes comprises,
pour conférer des propriétés anti-corrosion et d'adhérence à une pièce comprenant une partie comprenant du métal, dont ladite partie est enduite par ledit copolymère.

2. Utilisation selon la revendication 1, **caractérisée en ce que** le copolymère à blocs est utilisé pour conférer à la partie enduite une adhérence à des matériaux plastiques ou élastiques.

3. Utilisation selon la revendication 1 ou 2, **caractérisée en ce que** le bloc polyoléfine présente une viscosité inférieure à 40 000 cps, et de préférence inférieure à 20 000 cps et de façon encore préférentielle entre 1 000 et 20 000 cps.

4. Utilisation selon l'une quelconque des revendications précédentes, **caractérisée en ce que** le bloc polyoléfine est un bloc polybutadiène.

**5.** Utilisation selon l'une quelconque des revendications précédentes, **caractérisée en ce que** le bloc polyamide comprend au moins un motif choisi parmi PA 6, PA 11, PA12, PA 6.10, PA 6.6, PA 6.12, PA 10.10, PA 10.12, PA 11/10.T, PA 11/6.T, 12/10.T, 6.10/10.T, 6.12/10.T, 10.10/10.T, 10.12/10.T, 11/6.T/10.T, 12.12/10.T, 12/6.10/10.T, 12/6.12/10.T, 12/10.10/10.T, 12/10.12/10.T et 12/12.12/10.T.

**6.** Utilisation selon l'une quelconque des revendications précédentes, **caractérisée en ce que** le bloc polyamide présente une masse moléculaire en nombre mesurée par potentiométrie comprise entre 600 et 20 000, de préférence entre 4 000 et 10 000 g/mol.

**7.** Utilisation selon l'une quelconque des revendications précédentes, **caractérisée en ce que** le copolymère à blocs comprend une teneur en bloc polyoléfine comprise entre 5 et 70, de manière plus préférée entre 6 et 50%, préférentiellement entre 8 et 30, et de manière encore plus préférée entre 10 et 25 % en poids par rapport au poids total du copolymère à blocs, bornes comprises.

**8.** Utilisation selon l'une quelconque des revendications précédentes, **caractérisée en ce que** le copolymère à blocs comprend au moins un bloc allongeur de chaîne.

**9.** Copolymère à blocs comportant :

- au moins un bloc polyamide,
- au moins un bloc polyoléfine, ladite polyoléfine étant un homopolymère ou copolymère comprenant un ou plusieurs motifs oléfines, ledit bloc polyoléfine présentant une viscosité inférieure à 60 000 cps, la viscosité étant mesurée à 25°C avec un appareil de Brookfield et selon la méthode Brookfield,
- au moins un bloc alkylène, issu de la polycondensation d'un diacide en $C_8$-$C_{36}$, étant une chaîne aliphatique, linéaire, saturée,
ledit copolymère à blocs étant de formule suivante

PA-(R-Pol-PA)n-R-Pol-R-PA

Avec n compris entre 0 et 100, en particulier de 0 à 10, de préférence 0 ou 1,

PA désignant le bloc polyamide,
R désignant le bloc alkylène,
Pol désignant le bloc polyoléfine,
ledit copolymère à blocs comprenant une teneur en bloc polyoléfine comprise entre 2 et 98% en poids par rapport au poids total du copolymère à blocs, bornes comprises.

**10.** Copolymère à blocs selon la revendication 9, **caractérisé en ce qu'**il comporte :

- au moins un bloc polybutadiène en tant que bloc polyoléfine.

**11.** Copolymère à blocs selon l'une quelconque des revendications 9 à 10, **caractérisé en ce que** le bloc alkylène est issu de la polycondensation de dimères d'acide gras.

**12.** Copolymère à blocs selon l'une quelconque des revendications 9 à 11, **caractérisé en ce que** la teneur en bloc polyamide est comprise entre 2 et 98% en poids par rapport au poids total du copolymère à blocs.

**13.** Copolymère à blocs selon l'une quelconque des revendications 9 à 12, **caractérisé en ce que** la teneur en bloc alkylène est comprise entre 0,1 et 25%, de préférence entre 1 et 15% en poids par rapport au poids total du copolymère à blocs.

**14.** Copolymère à blocs selon l'une quelconque des revendications 9 à 13, **caractérisé en ce qu'**il comprend au moins un bloc allongeur de chaîne.

**15.** Copolymère à blocs selon la revendication 14, **caractérisé en ce que** le bloc allongeur de chaîne se situe à au moins une extrémité polyamide du copolymère.

**16.** Procédé de préparation du copolymère tel que défini à l'une quelconque des revendications 9 à 15, comportant une étape de mélange des différents blocs.

**17.** Procédé selon la revendication 16, comportant les étapes successives suivantes :

- une étape de mélange des blocs polyoléfines et alkylène, le rapport molaire entre les blocs polyoléfines et les blocs alkylène étant supérieur ou égal à ½, puis
- une étape de mélange des blocs polyamides avec le mélange obtenu à l'étape précédente.

**18.** Procédé de préparation selon les revendications 16 et 17, **caractérisé en ce qu'**il comprend une étape supplémentaire de mélange de blocs allongeur de chaine avec le mélange obtenu à l'étape précédente.

**19.** Composition comprenant au moins un copolymère à blocs tel que défini à l'une quelconque des revendications 9 à 15.

**20.** Composition selon la revendication 19, **caractérisée en ce qu'**elle se trouve sous forme de poudre ou de granulés.

**21.** Procédé de mise en œuvre de la composition définie à la revendication 19 ou 20, comprenant une étape d'injection, d'extrusion ou de pulvérisation.

**22.** Pièce comprenant

- au moins une partie comprenant du métal et
- une composition telle que définie à la revendication 19 ou 20, ladite composition étant appliquée sur ladite partie.

**23.** Pièce selon la revendication 22, comprenant une deuxième partie, et **caractérisée en ce que** la composition est interposée et est en contact avec les deux parties.

**24.** Pièce selon les revendications 22 et 23, **caractérisée en ce qu'**elle se présente sous la forme d'un câble, d'un filin, d'un tube, d'un récipient, d'un film ou d'une plaque, de préférence d'un tube.

**25.** Utilisation de la pièce telle que définie à l'une quelconque des revendications 22 à 24 pour le transport ou le stockage de fluides, en particulier présents dans les véhicules, dans des plateformes sous-marines (off-shore) ou terrestres, pour les systèmes réfrigérants comme des climatisations stationnaires ou mobiles, tels que des réfrigérateurs industriels ou non, pour des systèmes d'air conditionnée stationnaires ou mobiles.

**26.** Utilisation selon la revendication 25, **caractérisée en ce que** le fluide est choisi parmi une huile, un liquide de frein, des solutions d'urée, des liquides de refroidissement à base de glycol, des carburants, et particulièrement des bio-carburants, et encore plus particulièrement les bio-diesels, de l'eau potable, des eaux usées, du gaz, de l'air, des fluides caloporteurs, du pétrole et ses dérivés.

**Patentansprüche**

**1.** Verwendung eines Blockcopolymers, umfassend

- mindestens einen Polyamidblock,
- mindestens einen Polyolefinblock, wobei das Polyolefin ein Homopolymer oder Copolymer ist, das eine oder mehrere Olefineinheiten umfasst, wobei der Polyolefinblock eine Viskosität von weniger als 60.000 cP aufweist, wobei die Viskosität bei 25 °C mit einem Brookfield-Gerät und gemäß der Methode Brookfield gemessen wird, und
- mindestens einen Alkylenblock, der aus der Polykondensation einer $C_8$-$C_{36}$-Disäure resultiert und eine aliphatische, lineare, gesättigte Kette ist, wobei das Blockcopolymer die folgende Formel hat

PA-(R-Pol-PA)n-R-Pol-R-PA

mit n zwischen 0 und 100, insbesondere 0 bis 10, vorzugsweise 0 oder 1,
PA bezeichnet den Polyamidblock,
R bezeichnet den Alkylenblock,

Pol bezeichnet den Polyolefinblock,
wobei das Blockcopolymer einen Gehalt an Polyolefinblöcken von zwischen 2 und 98 Gew.-% umfasst, bezogen auf das Gesamtgewicht des Blockcopolymers, einschließlich Grenzen,
um Antikorrosions- und Hafteigenschaften einem Stück zu verleihen, das ein Teil umfasst, das Metall umfasst, wobei das Teil mit dem Copolymer beschichtet ist.

2. Verwendung nach Anspruch 1, **dadurch gekennzeichnet, dass** das Blockcopolymer verwendet wird, um dem beschichteten Teil eine Haftung auf plastischen oder elastischen Materialien zu verleihen.

3. Verwendung nach Anspruch 1 oder 2, **dadurch gekennzeichnet, dass** der Polyolefinblock eine Viskosität von weniger als 40.000 cP und vorzugsweise weniger als 20.000 cP und noch bevorzugter zwischen 1.000 und 20.000 cP aufweist.

4. Verwendung nach einem der vorhergehenden Ansprüche, **dadurch gekennzeichnet, dass** der Polyolefinblock ein Polybutadienblock ist.

5. Verwendung nach einem der vorhergehenden Ansprüche, **dadurch gekennzeichnet, dass** der Polyamidblock mindestens eine Einheit ausgewählt aus PA 6, PA 11, PA 12, PA 6.10, PA 6.6, PA 6.12, PA 10.10, PA 10.12, PA 11/10.T, PA 11/6.T, 12/10.T, 6.10/10.T, 6.12/10.T, 10.10/10.T, 10.12/10.T, 11/6.T/10.T, 12.12/10.T, 12/6.10/10.T, 12/6.12/10.T, 12/10.10/10.T, 12/10.12/10.T und 12/12.12/10.T umfasst.

6. Verwendung nach einem der vorhergehenden Ansprüche, **dadurch gekennzeichnet, dass** der Polyamidblock eine potentiometrisch gemessene Molekulargewichtszahl zwischen 600 und 20.000, vorzugsweise zwischen 4.000 und 10.000 g/mol aufweist.

7. Verwendung nach einem der vorangehenden Ansprüche, **dadurch gekennzeichnet, dass** das Blockcopolymer einen Gehalt an Polyolefinblöcken zwischen 5 und 70 umfasst, bevorzugt zwischen 6 und 50 Gew.-%, stärker bevorzugt zwischen 8 und 30 und noch stärker bevorzugt zwischen 10 und 25 Gew.-%, bezogen auf das Gesamtgewicht des Blockcopolymers, einschließlich Grenzen.

8. Verwendung nach einem der vorhergehenden Ansprüche, **dadurch gekennzeichnet, dass** das Blockcopolymer mindestens einen Kettenverlängerungsblock umfasst.

9. Blockcopolymer, beinhaltend:

   - mindestens einen Polyamidblock,
   - mindestens einen Polyolefinblock, wobei das Polyolefin ein Homopolymer oder Copolymer ist, das eine oder mehrere Olefineinheiten umfasst, wobei der Polyolefinblock eine Viskosität von weniger als 60.000 cPs aufweist, wobei die Viskosität bei 25 °C mit einem Brookfield-Gerät und gemäß der Methode Brookfield gemessen wird,
   - mindestens einen Alkylenblock, der aus der Polykondensation einer $C_8$-$C_{36}$-Disäure resultiert und eine aliphatische, lineare, gesättigte Kette ist, wobei das Blockcopolymer die folgende Formel hat

   $$PA\text{-}(R\text{-}Pol\text{-}PA)n\text{-}R\text{-}Pol\text{-}R\text{-}PA$$

   mit n zwischen 0 und 100, insbesondere 0 bis 10, vorzugsweise 0 oder 1,
   PA bezeichnet den Polyamidblock,
   R bezeichnet den Alkylenblock,
   Pol bezeichnet den Polyolefinblock,
   wobei das Blockcopolymer einen Gehalt an Polyolefinblöcken zwischen 2 und 98 Gew.-% umfasst, bezogen auf das Gesamtgewicht des Blockcopolymers, einschließlich Grenzen.

10. Blockcopolymer nach Anspruch 9, **dadurch gekennzeichnet, dass** es beinhaltet:

    - mindestens einen Polybutadienblock als Polyolefinblock.

11. Blockcopolymer nach einem der Ansprüche 9 bis 10, **dadurch gekennzeichnet, dass** der Alkylenblock aus der Polykondensation von Fettsäuredimeren resultiert.

12. Blockcopolymer nach einem der Ansprüche 9 bis 11, **dadurch gekennzeichnet, dass** der Gehalt an Polyamidblöcken zwischen 2 und 98 Gew.-% liegt, bezogen auf das Gesamtgewicht des Blockcopolymers.

13. Blockcopolymer nach einem der Ansprüche 9 bis 12, **dadurch gekennzeichnet, dass** der Gehalt an Alkylenblöcken zwischen 0,1 und 25 Gew.-% liegt, vorzugsweise zwischen 1 und 15 Gew.-%, bezogen auf das Gesamtgewicht des Blockcopolymers.

14. Blockcopolymer nach einem der Ansprüche 9 bis 13, **dadurch gekennzeichnet, dass** es mindestens einen Kettenverlängerungsblock umfasst.

15. Blockcopolymer nach Anspruch 14, **dadurch gekennzeichnet, dass** sich der Kettenverlängerungsblock an mindestens einem Polyamidende des Copolymers befindet.

16. Herstellungsverfahren des Copolymers nach einem der Ansprüche 9 bis 15, einen Schritt des Mischens der verschiedenen Blöcke beinhaltend.

17. Verfahren nach Anspruch 16, die folgenden aufeinanderfolgenden Schritte beinhaltend:

    - einen Schritt des Mischens der Polyolefin- und Alkylenblöcke, wobei das Molverhältnis zwischen den Polyolefinblöcken und den Alkylenblöcken größer oder gleich ½ ist, dann
    - einen Schritt des Mischens der Polyamidblöcke mit der im vorherigen Schritt erhaltenen Mischung.

18. Herstellungsverfahren nach den Ansprüchen 16 und 17, **dadurch gekennzeichnet, dass** es einen zusätzlichen Schritt des Mischens von Kettenverlängerungsblöcken mit der im vorherigen Schritt erhaltenen Mischung umfasst.

19. Zusammensetzung, mindestens ein Blockcopolymer umfassend, wie in einem der Ansprüche 9 bis 15 definiert.

20. Zusammensetzung nach Anspruch 19, **dadurch gekennzeichnet, dass** sie in Form eines Pulvers oder Granulats vorliegt.

21. Verfahren zur Implementierung der in Anspruch 19 oder 20 definierten Zusammensetzung, einen Injektions-, Extrusions- oder Sprühschritt umfassend.

22. Stück, umfassend

    - mindestens ein Teil umfasst Metall und
    - eine Zusammensetzung nach Anspruch 19 oder 20, wobei die Zusammensetzung auf das Teil aufgetragen wird.

23. Stück nach Anspruch 22, ein zweites Teil umfassend und **dadurch gekennzeichnet, dass** die Zusammensetzung dazwischen angeordnet ist und mit den beiden Teilen in Kontakt steht.

24. Stück nach den Ansprüchen 22 und 23, **dadurch gekennzeichnet, dass** es die Form eines Kabels, einer Leine, eines Rohrs, eines Behälters, einer Folie oder einer Platte aufweist, vorzugsweise eines Rohrs.

25. Verwendung des Stücks nach einem der Ansprüche 22 bis 24 für den Transport oder die Lagerung von Fluiden, insbesondere vorhanden in Fahrzeugen, auf Unterwasser-(Offshore) oder Landplattformen, für die Kühlsysteme der stationären oder mobilen Klimatisierungen, wie industrielle oder nicht-industrielle Kühlschränke und für stationäre oder mobile Klimaanlagen.

26. Verwendung nach Anspruch 25, **dadurch gekennzeichnet, dass** das Fluid ausgewählt ist aus einem Öl, einer Bremsflüssigkeit, Harnstofflösungen, Kühlmitteln auf Glykolbasis, Kraftstoffen und besonders Biokraftstoffen und ganz besonders Biodieseln, Trinkwasser, Abwasser, Gas, Luft, Wärmeträgerfluide, Erdöl und seine Derivate.

**Claims**

1. Use of a block copolymer comprising

- at least one polyamide block,
- at least one polyolefin block, said polyolefin being a homopolymer or copolymer comprising one or more olefin units, said polyolefin block having a viscosity lower than 60,000 cps, the viscosity being measured at 25°C with a Brookfield apparatus and according to the Brookfield method, and
- at least one alkylene block, resulting from the polycondensation of a $C_8$-$C_{36}$ diacid, being an aliphatic, linear, saturated chain,

said block copolymer being of the following formula

PA-(R-Pol-PA)n-R-Pol-R-PA

With n comprised between 0 and 100, in particular from 0 to 10, preferably 0 or 1,

PA designating the polyamide block,
R designating the alkylene block,
Pol designating the polyolefin block,

said block copolymer comprising a polyolefin block content comprised between 2 and 98% by weight with respect to the total weight of the block copolymer, limits included,

for giving anti-corrosion and adhesion properties to a part comprising a portion comprising metal, of which said portion is coated by said copolymer.

2. Use according to claim 1, **characterised in that** the block copolymer is used to give the coated portion an adhesion to plastic or elastic materials.

3. Use according to claim 1 or 2, **characterised in that** the polyolefin block has a viscosity lower than 40,000 cps, and preferably lower than 20,000 cps and even more preferably between 1,000 and 20,000 cps.

4. Use according to any of the preceding claims, **characterised in that** the polyolefin block is a polybutadiene block.

5. Use according to any of the preceding claims, **characterised in that** the polyamide block comprises at least one unit selected from PA 6, PA 11, PA12, PA 6.10, PA 6.6, PA 6.12, PA 10.10, PA 10.12, PA 11/10.T, PA 11/6.T, 12/10.T, 6.10/10.T, 6.12/10.T, 10.10/10.T, 10.12/10.T, 11/6.T/10.T, 12.12/10.T, 12/6.10/10.T, 12/6.12/10.T, 12/10.10/10.T, 12/10.12/10.T and 12/12.12/10.T.

6. Use according to any of the preceding claims, **characterised in that** the polyamide block has a number molecular weight measured by potentiometry comprised between 600 and 20,000, preferably between 4,000 and 10,000 g/mol.

7. Use according to any of the preceding claims, **characterised in that** the block copolymer comprises a polyolefin block content comprised between 5 and 70, more preferably between 6 and 50%, preferably between 8 and 30, and even more preferably between 10 and 25% by weight with respect to the total weight of the block copolymer, limits included.

8. Use according to any of the preceding claims, **characterised in that** the block copolymer comprises at least one chain extender block.

9. Block copolymer including

- at least one polyamide block,
- at least one polyolefin block, said polyolefin being a homopolymer or copolymer comprising one or more olefin units, said polyolefin block having a viscosity lower than 60,000 cps, the viscosity being measured at 25°C with a Brookfield apparatus and according to the Brookfield method,
- at least one alkylene block, resulting from the polycondensation of a $C_8$-$C_{36}$ diacid being an aliphatic, linear, saturated chain,

said block copolymer being of the following formula

PA-(R-Pol-PA)n-R-Pol-R-PA

With n comprised between 0 and 100, in particular from 0 to 10, preferably 0 or 1,

> PA designating the polyamide block,
> R designating the alkylene block,
> Pol designating the polyolefin block,
> said block copolymer comprising a polyolefin block content comprised between 2 and 98% by weight with respect to the total weight of the block copolymer, limits included.

10. Block copolymer according to claim 9, **characterised in that** it includes:

> - at least one polybutadiene block as a polyolefin block.

11. Block copolymer according to any of claims 9 to 10, **characterised in that** the alkylene block results from the polycondensation of dimers of fatty acids.

12. Block copolymer according to any of claims 9 to 11, **characterised in that** the polyamide block content is comprised between 2 and 98% by weight with respect to the total weight of the block copolymer.

13. Block copolymer according to any of claims 9 to 12, **characterised in that** the alkylene block content is comprised between 0.1 and 25%, preferably between 1 and 15% by weight with respect to the total weight of the block copolymer.

14. Block copolymer according to any of claims 9 to 13, **characterised in that** it comprises at least one chain extender block.

15. Block copolymer according to claim 14, **characterised in that** the chain extender block is located at at least one polyamide end of the copolymer.

16. Method for preparing the copolymer as defined in any of claims 9 to 15, including a step of mixing the different blocks.

17. Method according to claim 16, including the following successive steps

> - a step of mixing the polyolefin and alkylene blocks, the molar ratio between the polyolefin blocks and the alkylene blocks being greater than or equal to ½, then
> - a step of mixing the polyamide blocks with the mixture obtained in the preceding step.

18. Method for preparing according to claims 16 and 17, **characterised in that** it comprises an additional step of mixing chain extender blocks with the mixture obtained in the preceding step.

19. Composition comprising at least one block copolymer as defined in any of claims 9 to 15.

20. Composition according to claim 19, **characterised in that** it is in the form of powder or granules.

21. Method for implementing the composition defined in claim 19 or 20, comprising a step of injection, extrusion or spraying.

22. Part comprising

> - at least one portion comprising metal and
> - a composition as defined in claim 19 or 20, said composition being applied on said portion.

23. Part according to claim 22, comprising a second portion, and **characterised in that** the composition is interposed and is in contact with the two portions.

24. Part according to claims 22 and 23, **characterised in that** it has the form of a cable, rope, a tube, a recipient, a film or a plate, preferably a tube.

25. Use of the part as defined in any of claims 22 to 24 for the transport or the storage of fluids, in particular present in vehicles, in submarine(off-shore) or terrestrial platforms, for refrigerating systems such as stationary or mobile air conditioning, such as industrial (or not) refrigerators, for stationary or mobile air conditioning systems.

26. Use according to claim 25, **characterised in that** the fluid is selected from an oil, a brake liquid, urea solutions, glycol-based coolants, fuels, and particularly bio-fuels, and even more particularly bio-diesels, drinking water, waste water, gas, air, heat-transfer fluids, petroleum and derivatives thereof.

**Figure 1**

**EP 3 197 938 B1**

**Documents brevets cités dans la description**

- US 4018731 A
- EP 0471566 A
- EP 0581642 A
- EP 0739924 A
- EP 0581641 A
- EP 0425341 A

**Littérature non-brevet citée dans la description**

- Cycloaliphatic Aminés. **KIRK-OTHMER.** Encyclopaedia of Chemical Technology. 1992, 386-405